## Europäisches Patentamt
## European Patent Office
## Office européen des brevets

(19)

(11) Veröffentlichungsnummer: **0 004 584 B1**

(12) **EUROPÄISCHE PATENTSCHRIFT**

(45) Veröffentlichungstag der Patentschrift:
**02.06.82**

(21) Anmeldenummer: **79100802.2**

(22) Anmeldetag **15.03.79**

(51) Int. Cl.³: **G 01 C 3/08, G 01 P 3/68,
G 02 B 7/11, G 03 B 3/10**

(54) Anordnung zur Messung der Entfernung oder Geschwindigkeit eines Gegenstandes, ihre Verwendung und Verfahren zu ihrem Betrieb.

(30) Priorität: **31.03.78 DE 2813913**

(43) Veröffentlichungstag der Anmeldung:
**17.10.79 Patentblatt 79/21**

(45) Bekanntmachung des Hinweises auf die Patenterteilung:
**02.06.82 Patentblatt 82/22**

(84) Benannte Vertragsstaaten.
**BE FR IT NL**

(56) Entgegenhaltungen:
**DE-A-2 728 235
FR-A-2 073 232
FR-A-2 377 024
US-A-3 898 676
US-A-4 004 852**

(73) Patentinhaber: **SIEMENS AKTIENGESELLSCHAFT
Berlin und München, Postfach 22 02 61,
D-8000 München 22 (DE)**

(72) Erfinder: **Stein, Karl-Ulrich, Dr.,
Germersheimerstrasse 5, D-8000 München 90 (DE)**

## Anordnung zur Messung der Entfernung oder Geschwindigkeit eines Gegenstandes, ihre Verwendung und Verfahren zu ihrem Betrieb

Die Erfindung bezieht sich auf eine Anordnung zur Messung der Entfernung oder Geschwindigkeit eines Gegenstandes nach dem Oberbegriff des Patentanspruchs 1, 2 bzw. 5 sowie auf ihre Verwendung und auf Verfahren zu ihrem Betrieb.

Eine Anordnung dieser Art ist aus der US-A-3 898 676 bekannt. Hierbei ist die die eine Abbildung liefernde optische Einrichtung ortsfest angeordnet, während die die andere Abbildung liefernde optische Einrichtung so angeordnet ist, daß sie in ihrer Entfernung gegenüber der ortsfesten einstellbar ist. Die Bildpunkte beider CTD-Bildsensoren sind dabei in Verschieberichtung der über die eine optische Einrichtung abgeleiteten Abbildung linear zueinander ausgerichtet. Von jedem der CTD-Bildsensoren wird eine der Belichtung der einzelnen Bildpunkte entsprechende Sensorsignalfolge abgeleitet, wobei die beiden Signalfolgen in einem Phasenmesser bezüglich ihrer gegenseitigen Phasenverschiebung ausgewertet werden. Das Ausgangssignal des Phasenmessers wird einem Servomotor zugeführt, der die eine optische Einrichtung auf eine solche Entfernung von der anderen einstellt, daß die genannte Phasenverschiebung einen minimalen Wert annimmt. Die skalenmäßig feststellbare Größe der hierzu erforderlichen Verstellung der optischen Einrichtung stellt ein Maß für die Entfernung des zu messenden Gegenstandes dar. Weiterhin kann der Servomotor auch dazu benutzt werden, um ein über ihn angetriebenes Kameraobjektiv auf einen solchen Abstand gegenüber einer Bildebene einzustellen, daß eine Fokussierung der Abbildung des Gegenstandes auf diese Bildebene erfolgt.

In der US-A-4 004 852 ist eine Anordnung der eingangs angedeuteten Art beschrieben, bei der beide optischen Einrichtungen ortsfest vorgesehen sind. Die seriell ausgelesenen Sensorsignale des einen Bildsensors werden nach einer Quantisierung zu einer in einem ersten Schieberegister umlaufenden, ersten Signalgruppe zusammengefaßt, die seriell ausgelesenen Sensorsignale des anderen, eine größere Anzahl von Bildpunkten aufweisenden Bildsensors nach einer Quantisierung zu einer in einem zweiten Schieberegister umlaufenden, zweiten Signalgruppe. In einer Reihe von Signalvergleichen der einzelnen Sensorsignale der ersten Signalgruppe mit einzelnen, gegeneinander versetzten Teilgruppen der zweiten Signalgruppe werden die Summen der Signalübereinstimmungen ausgewertet, die jeweils den einzelnen Teilgruppen zugeordnet sind. Der Übergang von einer Teilgruppe zur nächsten wird jeweils dann gezählt, wenn die letztere Teilgruppe eine höhere Summe von Signalübereinstimmungen ergibt als zuvor erhalten wurden. Wenn sämtliche Teilgruppen nacheinander in dieser Weise mit den Sensorsignalen der ersten Signalgruppe verglichen worden sind, stellt die Anzahl der Übergänge, die zur Erreichung der maximalen Signalübereinstimmung erforderlich sind, ein Maß für die Entfernung des Gegenstandes dar. Aus der Anzahl der Übergänge wird ein elektrisches Signal abgeleitet, das entweder eine Entfernungsanzeige liefert oder einen Servomechanismus zur automatischen Fokussierung eines optischen Gerätes einstellt, das eine solche Anordnung zur Entfernungsmessung enthält.

Eine Anordnung zur Entfernungsmessung, bei der zum Unterschied von den bisher genannten Anordnungen anstelle der CTD-Bildsensoren zwei Reihen von lichtempfindlichen Elementen vorgesehen sind, die mit einer Mehrzahl von Differenzverstärkern verbunden sind, ist aus der DE-A-2 728 235 bekannt. Die eine der beiden optischen Einrichtungen weist hierbei einen ortsfesten Spiegel auf, die andere einen um eine ortsfeste Achse drehbaren. Die einander entsprechenden lichtempfindlichen Elemente beider Reihen werden durch Differenzverstärker jeweils paarweise zusammengefaßt, wobei die Differenzverstärker Differenzsignale von den zusammengefaßten lichtempfindlichen Elementen ableiten, die dann zu einem Summensignal addiert werden. Das invertierte Summensignal wird dann jeweils für eine Mehrzahl von sich monoton ändernden Winkeleinstellungen des drehbaren Spiegels, die mit einer Mehrzahl von Entfernungseinstellungen eines Objektivs von einer Bildebene mechanisch gekuppelt sind, gebildet. Diese Kupplung wird immer dann unterbrochen, wenn das zu einer bestimmten Winkeleinstellung gehörende, invertierte Summensignal kleiner ist als die Summensignale, die zu den vorhergegangenen Winkeleinstellungen gehören. Nach dem Durchlaufen sämtlicher möglicher Winkeleinstellungen hat sich dabei das Objektiv automatisch auf eine solche Entfernung von der Bildebene eingestellt, bei der der Gegenstand scharf abgebildet wird.

Eine Anordnung zur Entfernungsmessung, bei der die beiden Abbildungen über zwei Teilpupillen abgeleitet werden, die unterschiedliche Teilbereiche der Eintrittspupille eines Objektivs freigeben, und bei der die die Teilpupillen durchdringenden Lichtflüsse getrennten Fotodetektoren zugeführt werden, ist in der DE-B-2 156 617 insbesondere anhand der Fig. 2 beschrieben.

Der Nachteil dieser bekannten Anordnung liegt darin, daß jeder der Fotodetektoren ein elektrisches Signal abgibt, das auf dem Wege einer Integration über die Helligkeitswerte des gesamten Bildinhaltes gewonnen wird. Die Kongruenz der beiden Abbildungen, die sich aus einem Vergleich der beiden Signale der Fotodetektoren ergibt, ist hierbei nicht mit großer Genauigkeit feststellbar. Weiterhin werden die beiden Abbildungen unter Zwischenschaltung eines in einer Abbildungsebene des Gegenstandes angeordneten und innerhalb derselben bewegbaren Gitters erzeugt, was den mechanischen Aufwand erhöht. Der Abstand des Gegenstandes wird dabei erst nach Durchführung eines Fokussierungsvorganges am Objektiv aus der mechanischen Einstellung des letzteren abgeleitet.

Der Erfindung liegt die Aufgabe zugrunde, die bekannten Anordnungen der eingangs genannten Art bei möglichst einfacher Ausbildung im Hinblick auf die erreichbare Meßgenauigkeit zu verbessern.

Die wird erfindungsgemäß durch die im kennzeichnenden Teil der Patentansprüche 1, 2 bzw. 5 angeführten Maßnahmen erreicht.

Der mit der Erfindung erzielbare Vorteil besteht insbesondere darin, daß die Kongruenz der beiden Abbildungen an Hand der Übereinstimmung zweier elektrischer Signale festgestellt wird, die jeweils nur durch eine Integration der in einer Zeile der betreffenden Abbildung vorhandenen Helligkeitswerte gewonnen werden. Damit wird die Genauigkeit bei der Feststellung der Kongruenz gegenüber den bekannten Anordnungen weitgehend erhöht. Insbesondere wird eine Fehlmessung, die durch ein zufälliges Übereinstimmen der über die ganzen Bildinhalte integrierten Signale verursacht werden könnte, ohne daß tatsächlich eine Kongruenz zwischen beiden Abbildungen besteht, ausgeschaltet. Ein weiterer Vorteil besteht darin, daß die CTD-Bildsensoren mit den einzelnen Komponenten der auswertenden Einrichtung auf einem Halbleitersubstrat monolithisch integrierbar sind, so daß ein Halbleiterbaustein entsteht, der ohne Schwierigkeiten in verschiedenen, von einer solchen Entfernungsmessung Gebrauch machenden Geräten untergebracht werden kann, ohne deren Raumbedarf nennenswert zu vergrößern.

Die Erfindung wird nachfolgend an Hand einiger in der Zeichnung dargestellter, bevorzugter Ausführungsbeispiele näher erläutert. Dabei zeigt

Fig. 1 eine schematische Darstellung eines ersten Ausführungsbeispiels der Erfindung,

Fig. 2 einen Teil des Ausführungsbeispiels nach Fig. 1,

Fig. 3 eine schematische Darstellung eines in sämtlichen Ausführungsbeispielen verwendbaren CTD-Bildsensors,

Fig. 4 ein Zeitdiagramm, das den Betrieb des Ausführungsbeispiels nach Fig. 1 in Verbindung mit einem CTD-Bildsensor nach Fig. 3 veranschaulicht,

Fig. 5 einen Teil eines zweiten Ausführungsbeispiels in schematischer Darstellung,

Fig. 6 einen Teil eines dritten Ausführungsbeispiels und

Fig. 7 ein weiteres Ausführungsbeispiel in schematischer Darstellung.

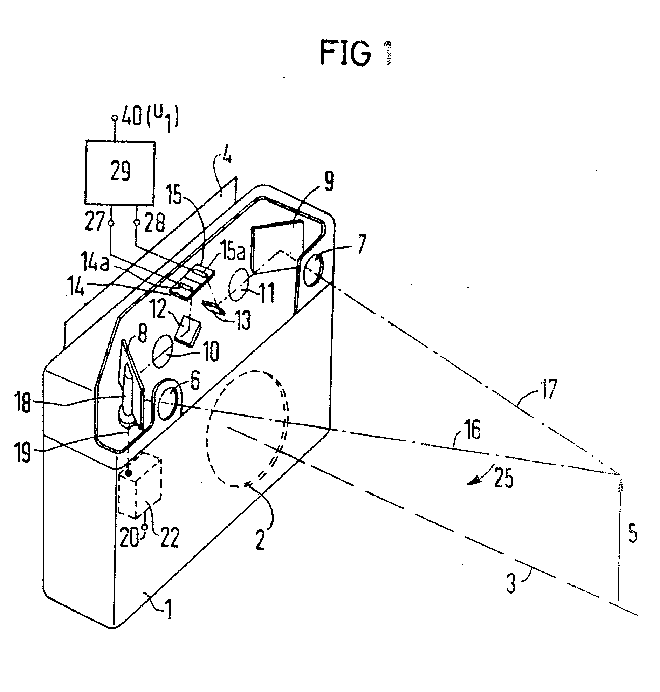

In Fig. 1 ist eine Anordnung nach der Erfindung in Verbindung mit einer fotografischen Kamera 1 dargestellt. Diese besitzt ein Objektiv, das mit 2 angedeutet ist. 3 bezeichnet die optische Achse der Kamera. Eine Bildebene 4, die im Inneren des Kameragehäuses angeordnet ist und durch die Ebene bestimmt wird, in der sich das lichtempfindliche Material, z. B. ein fotografischer Film, befindet, ist in Fig. 1 lediglich aus Gründen der besseren Übersicht außerhalb des Kameragehäuses schematisch dargestellt. Zur Ermittlung der Entfernung eines Gegenstandes 5 dienen zwei optische Einrichtungen, die jeweils aus den Hilfspupillen 6 und 7, den Spiegeln 8 und 9, Sammellinsen 10 und 11, Ablenkspiegeln 12 und 13 und zwei Projektionsflächen 14 und 15 bestehen. Auf diese werden jeweils Abbildungen des Gegenstandes 5 projiziert. Die von der Spitze von 5 ausgehenden Lichtstrahlen sind dabei mit 16 und 17 bezeichnet.

Der Spiegel 8 ist an einem drehbar gelagerten, vertikalen Stift 18 befestigt, der über ein mit 19 angedeutetes Antriebsorgan mit einer Einstellvorrichtung 22 verbunden ist. Wird der auf die Projektionsfläche 14 fallende Lichtstrahl 16 durch Drehung des Spiegels 8 entsprechend dem Pfeil 25 gedreht, so entfernt sich der Schnittpunkt der Strahlen 16 und 17 parallel zur optischen Achse 3 immer weiter von der Kamera 1.

Für eine Einstellfolge von unterschiedlichen Winkellagen des Spiegels 8, bei der die Strahlen 16 und 17 zunächst einen in Kameranähe liegenden Schnittpunkt aufweisen und dieser Schnittpunkt dann in immer größere Entfernung verschoben wird, entsteht von dem Gegenstand 5 auf der Projektionsfläche 15 eine konstante Abbildung, während seine Abbildung auf der Projektionsfläche 14 entsprechend der Drehbewegung des Spiegels 8 in Richtung senkrecht zur Bildebene 4 verschoben wird. Für den Fall, daß die Strahlen 16 und 17 gerade auf den Gegenstand 5 ausgerichtet sind, wie dies in Fig. 1 der Fall ist, weisen dann die Abbildungen auf den Projektionsflächen 14 und 15 keine Verschiebung gegeneinander auf. Die gegenseitige Verschiebung der Abbildungen bzw. das Fehlen einer solchen wird über CTD-Bildsensoren 14a und 15a, deren Ausgänge mit 27 und 28 bezeichnet sind, und über eine erste Bewerterschaltung 29 in der Weise ausgewertet, daß an einem Ausgang 40 ein Signal $u_1$ gebildet wird, das ein Maß für die Entfernung des Gegenstandes 5 von der Kamera 1 darstellt.

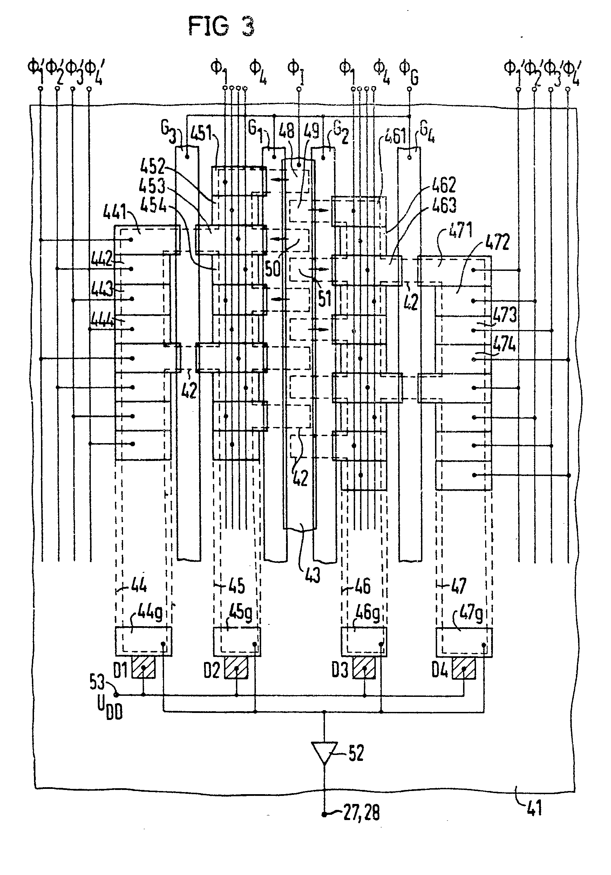

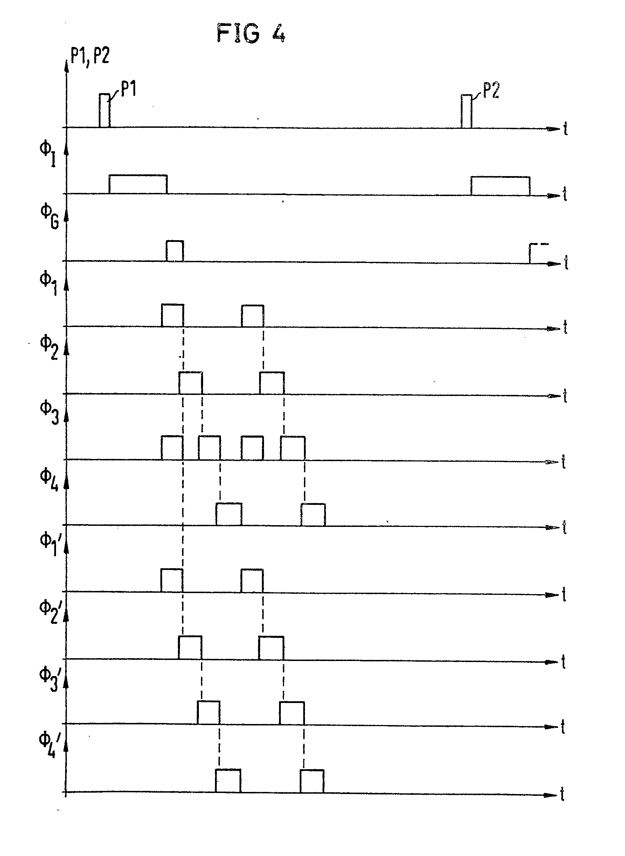

Die Bildsensoren 14a und 15a sind als Ladungsübertragungseinrichtungen (Charge Transfer Device) ausgebildet. Sie weisen eine Anzahl von Bildpunkten auf, die linear ausgerichtet sind. Beide Bildsensoren 14a und 15a liegen mit ihren Längsachsen parallel zu der Verschieberichtung der über den drehbar gelagerten Spiegel 8 erzeugten Abbildung und sind im übrigen auf einander entsprechende Zeilen der Abbildungen ausgerichtet, die einen bestimmten Punkt auf dem den Gegenstand 5 darstellenden Pfeil enthalten. Die Ausbildung der Bildsensoren wird an Hand der Fig. 3 und 4 noch näher beschrieben.

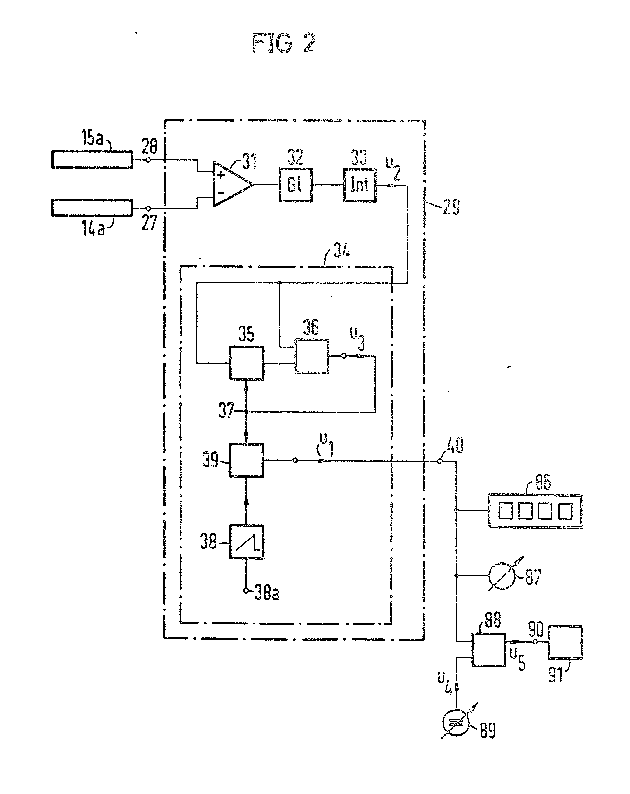

Wie Fig. 2 entnehmbar ist, sind die Bildsensoren 14a und 15a mit Ausgängen 27 und 28 versehen, über die die in den einzelnen Bildpunkten der Sensoren gebildeten, von der jeweiligen lokalen Belichtung derselben abhängigen elektrischen Signale sequentiell ausgelesen werden. Für jede Einstellung des Spiegels 8 treten an den Ausgängen 27 und 28 Auslesesignale auf, die in ihrem zeitlichen Verlauf der Belichtung der nacheinander ausgelesenen Bildpunkte entsprechen. In einem Differenzverstärker 31 wird das Differenzsignal dieser Auslesesignale gebildet, das in einem nachgeschalteten Gleichrichter 32 gleichgerichtet und in einem sich anschließenden Integrator 33 integriert wird. Damit entsteht am Ausgang des Integrators 33 ein integriertes Auslesesignal $u_2$, das einem über sämtliche Bildpunkte der Bildsensoren gebildeten Mittelwert der aus einander entsprechenden Bildpunkten beider Sensoren abgeleiteten Differenzsignale entspricht.

In Abhängigkeit von einer Folge von nacheinander erreichten Einstellungen des Spiegels 8 entsteht in der vorstehend beschriebenen Weise eine Folge von integrierten Auslesesignalen $u_2$, die einer Selektionsstufe 34 zugeführt werden. In dieser gelangen sie an den Signaleingang einer ersten Abtaststufe 35 und den ersten Eingang eines Komparators 36. Durch ein Signal am Steuereingang 37 der Abtaststufe 35 wird das zuerst auftretende Signal $u_2$ abgetastet, in 35 gespeichert und an den Ausgang von 35 durchgeschaltet. Damit liegt es auch am zweiten Eingang des Komparators 36 an. Tritt nun ein zweites Signal $u_2$ auf, das kleiner ist als das erste, so wird im Komparator 36 ein impulsförmiges Ausgangssignal $u_3$ gebildet, das der Stufe 35 über ihren Steuereingang 37 zugeführt wird und diese veranlaßt, das kleinere Signal $u_2$ abzutasten und an den zweiten Eingang des Komparators 36 zu legen. Jedes der Signale $u_2$, das kleiner ist als sämtliche zeitlich vor ihm liegende Signale $u_2$ innerhalb derselben Einstellfolge, ist durch die Steuerwirkung des Komparators 36 auf die Stufe 35 in der Lage, das zuvor in dieser gespeicherte Signal $u_2$ zu verdrängen, wobei es für die nachfolgenden, im Komparator 36 ablaufenden Vergleichsvorgänge als neues Bezugssignal dient. Nach Beendigung einer Einstellfolge ist in der Stufe 35 dasjenige integrierte Auslesesignal $u_2$ gespeichert, das die kleinste Amplitude aufweist. Wird nun synchron mit dem Beginn der Einstellfolge ein Generator 38 über einen Eingang 38a getriggert, der daraufhin einen ansteigenden oder abfallenden Spannungsverlauf erzeugt, so bewirkt das beim Auftreten des kleinsten Signals $u_2$ abgegebene, impulsförmige Signal $u_3$ die Abtastung und Speicherung des zu diesem Zeitpunkt vorhandenen Amplitudenwertes $u_1$ der Generatorspannung in einer dem Generator 38 nachgeschalteten, zweiten Abtaststufe 39, deren Steuereingang mit dem Steuereingang 37 der ersten Abtaststufe 35 identisch ist. Das Signal $u_1$, das der Zeitdifferenz zwischen dem Auftreten des integrierten Auslesesignals $u_2$ kleinster Amplitude und dem Beginn der Einstellfolge entspricht, ist an dem Ausgang 40 der Selektionsstufe, der gleichzeitig den Ausgang der ersten Bewerterschaltung 29 darstellt, abgreifbar. Es stellt ein Maß für die Entfernung des Gegenstandes 5 dar.

Das Signal $u_1$ wird einer digitalen Anzeigevorrichtung 86 oder einer analogen Anzeigevorrichtung 87 zugeführt. Eine weitere Möglichkeit der Entfernungsauswertung besteht darin, das Signal $u_1$ in einem Komparator 88 mit einem von einer insbesondere einstellbaren Spannungsquelle 89 gelieferten Bezugssignal $u_4$ zu vergleichen und ein beim Auftreten von Spannungsgleichheit am Ausgang 90 des Komparators auftretendes Signal $u_5$ zur Anzeige des Erreichens einer vorgegebenen Entfernung des Gegenstandes 5 von der Kamera 1 zu benutzen. Bei einem doppelten Vergleich zwischen einem periodisch ermittelten Signal $u_1$, das durch periodische Einstellfolgen des Spiegels 8 erhalten wird, und zwei Bezugssignalen $u_4$ unterschiedlicher Größe kann bei einer Bewegung des Gegenstandes 5 aus dem Zeitintervall zwischen den beiden auftretenden Signalen $u_5$, das durch einen Zeitmesser 91 gemessen wird, eine Geschwindigkeitsmessung abgeleitet werden. Dabei wird das Zeitintervall zweckmäßigerweise digital ausgemessen.

Die Teile 38 und 39 der Selektionsstufe 34, die als ein Zeitmesser aufzufassen sind, können auch durch einen anders aufgebauten Zeitmesser ersetzt sein. Dieser hat dann die Aufgabe, das Zeitintervall zwischen einem am Schaltungspunkt 38a auftretenden Triggerimpuls, der mit dem Beginn der Einstellfolge des Objektivabstandes zeitlich zusammenfällt, und dem Auftreten des Signals $u_3$ zu messen und das Meßergebnis in Form einer Spannung $u_1$ auszugeben.

In Fig. 3 ist eine bevorzugte Ausführungsform eines auf einem Halbleitersubstrat integrierten CTD-Bildsensors in Draufsicht dargestellt. Dabei ist das Halbleitersubstrat, das z. B. aus n-leitendem Silizium besteht, mit 41 bezeichnet. Eine die Substratoberfläche bedeckende, elektrisch isolierende Schicht, z. B. aus $SiO_2$, ist innerhalb der gestrichelten Linien 42 wesentlich dünner ausgebildet als außerhalb derselben. Man bezeichnet die dünneren Bereiche auch als Gateoxid, die dickeren als Feldoxidbereiche. Oberhalb der isolierenden Schicht befindet sich eine mittlere Elektrode 43, die auf der einen Seite von Elektrodenreihen 44 und 45 und auf der anderen Seite von Elektrodenreihen 46 und 47 flankiert wird. Die Elektroden sind metallisch leitende Strukturen, die insbesondere aus Teilen einer ganzflächig aufgebrachten, elektrisch leitenden Beschichtung bestehen. Die Beschichtung ist beispielsweise aus polykristallinem, hochdotiertem Silizium gebildet oder besteht aus einer Metallschicht, z. B. aus Aluminium. Die Herstellung der Elektrode 43 und der Elektrodenreihen 44 bis 47 erfolgt in herkömmlicher Weise, z. B. mittels einer Reihe von fotolithografischen Schritten unter Anwendung von Masken, die die Umrisse der einzelnen Strukturen definieren.

Im einzelnen stellen die von der Elektrode 43 bedeckten Orte des Halbleitersubstrats 41, die sich unterhalb von Dünnoxidbereichen befinden, einzelne Bildpunkte 48, 49, 50, 51 usw. des Bildsensors dar. Da diese Bildpunkte eine Linie bilden, wird ein solcher Bildsensor als linear bezeichnet. Die Elektrodenreihen 44 bis 47 werden jeweils aus einzelnen. dicht nebeneinanderliegenden Elektroden 441, 442, 443, 444 ... 451, 452, 453, 454 ... gebildet. Dabei befindet sich die Elektrode 451 auf der Höhe des Bildpunktes 48, die Elektroden 452 und 461 auf der Höhe des Bildpunktes 49, die Elektroden 441, 453 und 462 auf der Höhe des Bildpunktes 50, die Elektroden 442, 454, 463 und 471 auf der Höhe des Bildpunktes 51 usw. Zwischen den Elektrodenreihen 45 bzw. 46 und der Elektrode 43 sind jeweils Transfergate-Elektroden $G_1$, $G_2$ plaziert, die die ersteren geringfügig seitlich überlappen, jedoch von diesen durch eine Zwischenschicht elektrisch isoliert sind. Zwischen den Elektrodenreihen 44 und 45 und den Elektrodenreihen 46 und 47 befinden sich weitere Transfergate-Elektroden $G_3$ und $G_4$. Die Elektrode 43 ist über einen Anschluß mit einer Impulsspannung $\Phi_1$ beschaltet, die Transfergate-Elektroden $G_1$ bis $G_4$ über einen gemeinsamen Anschluß mit einer Impulsspannung $\Phi_G$. Jede vierte Elektrode 451, 454 usw. von 45 ist über eine gemeinsame Leitung mit einer Impulsspannung $\Phi_1$ beschaltet, jede vierte Elektrode 452, 455 usw. liegt an einer gemeinsamen Leitung, die eine Impulsspannung $\Phi_2$ führt, jede vierte Elektrode 453 usw. an einer Leitung mit der Impulsspannung $\Phi_3$ und jede vierte Elektrode 454 usw. an einer Leitung mit der Impulsspannung $\Phi_4$. In analoger Weise werden die einzelnen Elektroden der Reihe 46 mit den Impulsspannungen $\Phi_1$ bis $\Phi_4$ beschaltet, während die Elektroden der Reihen 44 und 47 mit Impulsspannungen $\Phi_1'$ bis $\Phi_4'$ beschaltet sind.

Jede der Elektrodenreihen 44 bis 47 gehört zu einer Ladungsübertragungseinrichtung, die durch die Impulsspannungen $\Phi_1$ bis $\Phi_4$ bzw. $\Phi_1'$ bis $\Phi_4'$ getaktet werden. Am unteren Ende jeder Elektrodenreihe sind Elektroden 44g bis 47g dargestellt, die von den Taktimpulsspannungen freigeschaltet sind, jedoch an einen gemeinsamen Eingang eines Verstärkers 52 gelegt sind. Diesen Elektroden sind ausgangsseitige Diffusionsgebiete $D_1$ bis $D_4$ nachgeordnet, die über einem gemeinsamen Anschluß 53 an einer Drainspannung $U_{DD}$ liegen.

Im Betrieb wird nach dem Auftreten eines Impulses $P_1$, der einem Eingang 20 der Einstellvorrichtung 22 zugeführt wird und die erste Einstellung des Spiegels 8 innerhalb einer Einstellfolge veranlaßt, ein Impuls $\Phi_1$ angelegt, der die sogenannte Integrationszeit der gemäß Fig. 3 ausgebildeten Bildsensoren 14a und 15a bestimmt. Innerhalb derselben sammeln sich in den Bildpunkten 48 bis 51 beider Bildsensoren unter dem Einfluß der Belichtung durch die Hilfsabbildungen elektrische Ladungen an, die mit ihrer Größe der jeweiligen lokalen Beleuchtungsstärke entsprechen. Nach dem Ablauf der Integrationszeit sorgt ein Impuls $\Phi_G$ dafür, daß diese Ladungen in den eingezeichneten Pfeilrichtungen aus den Bildpunkten in den Bereich der Ladungsverschiebeeinrichtungen 44 bis 47 verschoben werden, und zwar die unter 48 entstandene Ladung unter die Elektrode 451, die unter 49 entstandene Ladung unter 461, die unter 50 entstandene Ladung unter 441 und die unter 51 entstandene Ladung unter 471. Durch die zeitlich entsprechend Fig. 4 auftretenden Taktimpulsspannungen $\Phi_1$ bis $\Phi_4$ und $\Phi_1'$ bis $\Phi_4'$ werden die genannten Ladungen nach dem Durchlaufen der Ladungsverschiebeeinrichtungen schrittweise unter den Elektroden 44g bis 47g hindurchgeschoben und gelangen schließlich in die Diffusionsgebiete $D_1$ bis $D_4$. Die hierbei an den Elektroden 44g bis 47g auftretenden Potentialverschiebungen werden im Falle des Sensors 14a an den Ausgang 27 und im Falle des Sensors 15a an den Ausgang 28 übertragen und ergeben dort Auslesesignale, die aus nacheinander auftretenden, impulsförmigen Anteilen bestehen, die den Beleuchtungsstärken in den nacheinander ausgelesenen Bildpunkten während der Integrationszeit jeweils entsprechen. Diese Auslesesignale werden, wie bereits beschrieben, den Eingängen der ersten Bewerterschaltung 29 (Fig. 2) zugeführt und zu einem integrierten Auslesesignal $u_2$ verarbeitet.

Ein Impuls $P_2$, der dem Eingang 50 anschließend zugeführt wird, veranlaßt die nächstfolgende Einstellung des Signals 8 innerhalb derselben Einstellfolge, wonach ein weiterer Impuls $\Phi_1$ die nächste Integrationszeit definiert. Dabei kann diese Integrationszeit auch zeitlich mit dem Verschieben der in der vorangegangenen Integrationszeit gebildeten Ladungen über die Ladungsverschiebeeinrichtungen 44 bis 47 zusammenfallen.

Ein Bildsensor gemäß Fig. 3 ist im einzelnen in der DE-C-2 553 658 beschrieben. Eine Vereinfachung dieser Schaltung ist insofern möglich, als die Ladungsverschiebeeinrichtungen 44 und 47 entfallen können, wobei lediglich über die Einrichtungen 45 und 46 ausgelesen wird. Damit reduziert sich die Anzahl der ausgelesenen Bildpunkte jeweils auf die Hälfte, nämlich auf die Punkte 48, 49 und solchen Bildpunkten, die zu diesen jeweils einen Abstand aufweisen, der ein Vielfaches von vier Bildpunktabständen beträgt. Ein in dieser Weise vereinfachter Bildsensor ist beispielsweise in dem IBM Technical Disclosure Bulletin, Bd. 16, Nr. 1, Juni 1973, Seiten 173 und 174, beschrieben. Anstelle der dargestellten Ladungsverschiebeeinrichtungen 44 bis 47, die als SCCD-Einrichtungen mit einem Ladungstransport unmittelbar unterhalb der Substratoberfläche oder als BCCD-Einrichtungen mit einem Ladungstransport im Inneren des Substrats aufzufassen sind, können im Sinne der vorliegenden Erfindung auch an sich bekannte Eimerkettenschaltungen (BBD) verwendet werden. Beide Systeme von Ladungsverschiebeeinrichtungen sind in dem Buch von Sequin und Tompsett, »Charge Transfer Devices«, Academic Press, New York, 1975, auf den Seiten 1 bis 18 beschrieben.

Anstelle von Ladungsverschiebeeinrichtungen, die im Vierphasenbetrieb arbeiten, können auch solche verwendet werden, die in an sich bekannter Weise im Zwei- oder Dreiphasenbetrieb arbeiten. Schließlich kann auch die mittlere Elektrode 43 in Fig. 3 in eine Elektrodenreihe entsprechend den Teilen 44 bis 47 zerlegt werden, wobei zunächst allen Elektroden dieser Reihe ein gemeinsamer, die Integrationszeit definierender Impuls $\Phi_1$ zugeführt wird und anschließend den einzelnen Elektroden Taktimpulsspannungen $\Phi_1$ bis $\Phi_4$ entsprechend Fig. 4 mitgeteilt werden. Dabei ist jedoch darauf zu achten, daß lediglich die unterhalb jeder vierten Elektrode befindlichen Bildpunkte belichtet werden. In dem letztgenannten Fall ist der Verstärker 52 an den untersten Teil der Elektrode 43, der dann eine »Floating Gate«-Elektrode darstellt, angeschlossen, wobei die Ladungsverschiebeeinrichtungen 44 bis 47 entfallen. In diesem Fall ist der gesamte unter der Elektrode 43 liegende Bereich der Isolierschicht als Gateoxidbereich ausgebildet.

Nimmt man an, daß jede Elektrode der Elektrodenreihen 44 bis 47 eine Länge von 10 µm aufweist und 100 Elemente bzw. Bildpunkte 48, 49 usw. vorgesehen sind, so ergibt sich eine Länge der Bildsensoren 14a und 15a von 1 mm. Einer Folgefrequenz der einzelnen Taktimpulsspannungen $\Phi_1$ bis $\Phi_4$ von einem MHz entspricht dann eine Auslesezeit von 0,1 ms. Nimmt man ferner eine Integrationszeit in der Größenordnung von 10 ms an, so ist die Auslesezeit demgegenüber zu vernachlässigen. Damit ergibt sich für eine Einstellfolge des Spiegels 8, die aus 50 einzelnen Schritten besteht, denen jeweils eine Integrationszeit von 10 ms zugeordnet werden muß, ein Zeitbedarf von etwa 0,5 Sekunden. Nach dieser Zeit hat die erste Bewerterschaltung 29 das Signal $u_1$ ermittelt.

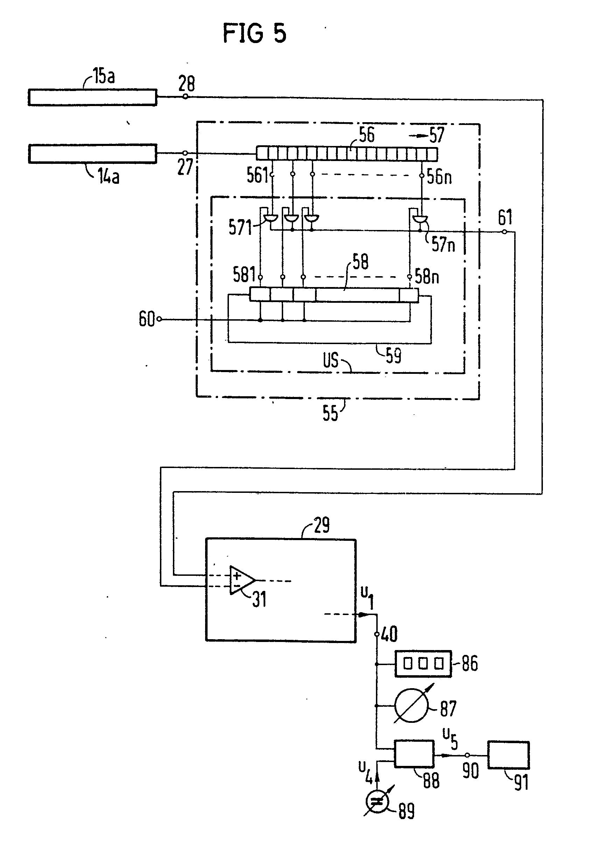

Ein zweites Ausführungsbeispiel der Erfindung wird im folgenden an Hand der Fig. 1 und 5 beschrieben. Es unterscheidet sich von dem ersten Ausführungsbeispiel dadurch, daß der Spiegel 8 ortsfest angeordnet ist, wobei die Teile 19, 20 und 22 entfallen. An die Stelle des drehbaren Spiegels 8 tritt nunmehr, wie in Fig. 5 dargestellt ist, ein stufenweise einstellbares Verzögerungsglied 55, das dem Sensorausgang 27 nachgeschaltet ist. Im übrigen entspricht die Schaltung nach Fig. 5 der Schaltung nach Fig. 2. Das stufenweise einstellbare Verzögerungsglied 55 enthält im einzelnen ein Schieberegister 56, dessen Eingang die impulsförmigen Anteile des Auslesesignals des Bildsensors 14a über dessen Ausgang 27 in der Reihenfolge ihres Auftretens, d. h. seriell, eingegeben werden. Die von den einzelnen Bildpunkten des Bildsensors 14a abgeleiteten analogen Signalwerte werden sodann in dem Schieberegister 56 in Richtung des Pfeils 57 verschoben. Einzelne, zueinander äquidistante Stufen des Schieberegisters 56 sind über Ausgänge 561 bis 56n mit den ersten Eingängen einer Reihe von Und-Gattern 571 bis 57n verbunden, deren zweite Eingänge jeweils an die Ausgänge 581 bis 58n der Stufen eines Schieberegisters 58 geschaltet sind. Die letzte Stufe des Schieberegisters 58 ist über eine Leitung 59 mit dem Signaleingang der ersten Stufe verbunden. In das Schieberegister 58 ist ein einzelnes, durch einen hohen Spannungswert gekennzeichnetes, logisches Signal eingegeben, das beim Auftreten eines Taktimpulses an dem Eingang 60, der den Takteingängen der Stufen über eine gemeinsame Leitung zugeführt wird, jeweils in die nächste Stufe verschoben wird. Mit Ausnahme der dieses logische Signal jeweils speichernden Stufe sind alle übrigen Stufen des Schieberegisters 58 mit logischen Signalen belegt, die durch einen niedrigen Spannungswert gekennzeichnet sind. Jeweils der mit dem logischen Signal hoher Spannung belegte Ausgang, d. h. einer der Ausgänge 581 bis 58n, schaltet über das zugeordnete Und-Gatter einen der Ausgänge 561 bis 56n an den Ausgang 61 des Verzögerungsgliedes durch. Beim Auftreten des nächsten Taktimpulses am Eingang 60 tritt dann der nächstfolgende, in Richtung des Pfeils 57 liegende Ausgang von 56 an dessen Stelle.

Die dem Schieberegister 56 eingegebenen Auslesesignale des Bildsensors 14a werden somit einstellbar verzögert, wobei die Größe der Verzögerung von der mit dem einzelnen logischen Signal hoher Spannung beaufschlagten Stufe des Schieberegisters 58 abhängt. Das stufenweise verzögerte Auslesesignal wird zusammen mit dem Auslesesignal, das von dem Bildsensor 15a über den Ausgang 28 und gegebenenfalls ein diesem nachgeschaltetes konstantes Verzögerungsglied abgeleitet wird, den beiden Eingängen eines Differenzverstärkers 31 zugeführt, der die eingangsseitige Stufe der bereits an Hand von Fig. 2 beschriebenen ersten Bewerterschaltung 29 darstellt.

Mit besonderem Vorteil ist das Schieberegister 56 als eine Ladungsverschiebeeinrichtung ausgebildet, wie sie beispielsweise in Fig. 3 dargestellt und mit 44 bezeichnet ist. Dabei wird die Eingangsstufe einer solchen Ladungsverschiebeeinrichtung, die aus einem eingangsseitigen, entgegengesetzt zu dem Halbleitersubstrat dotierten und als Eingangsdiode bezeichneten Gebiet und den ersten beiden Elektroden, z. B. 441 und 442 in Fig. 3, besteht, gemäß der Fig. 3.12 auf Seite 49 des Buches »Charge Transfer Devices« von Sequin und Tompsett, Academic Press, New York, 1975, ausgebildet. Die einzelnen Ausgänge 561 bis 56n werden durch »Floating-Gate«-Elektroden, die gleichzeitig die Gateelektroden von Ausgangs-Feldeffekttransistoren darstellen, gebildet. Diese Art der Auskopplung ist an Hand der Fig. 3.14(c) auf Seite 53 des genannten Buches von Sequin und Tompsett eingehend beschrieben. Geht man davon aus, daß das Schieberegister 56 eine Elektrodenreihe 441 bis 444 usw. gemäß Fig. 3 aufweist, die in der dort dargestellten Weise mit

Taktimpulsspannungen $\Phi_1'$ bis $\Phi_4'$ beaufschlagt sind, so gehören jeweils vier aufeinanderfolgende Elektroden, z. B. 441 bis 444, zu einer Stufe des Schieberegisters 56. Unter jeweils einer der vier zu einer solchen Stufe gehörenden Elektroden befindet sich dann die einen Teil des Ausgangs dieser Stufe darstellende Floating-Gate-Elektrode.

Geht man davon aus, daß der Impuls $P_1$ (Fig. 4) dem Eingang 60 in Fig. 5 zugeführt wird und den Ausgang 581 des Schieberegisters 58 auf einen hohen Spannungspegel schaltet, so wird das nach dem Ablauf einer durch einen Impuls $\Phi_1$ bestimmten Integrationszeit gebildete und über 27 ausgelesene Signal des Bildsensors 14a während des stufenweisen Verschiebens über das Schieberegister 56 am Ausgang 561 und damit mit der kleinstmöglichen Verzögerung ausgelesen. Nach Beendigung des Auslesevorganges wird an den Eingang 60 der Impuls $P_2$ gelegt, der das in einem nächstfolgenden Integrationsvorgang gebildete und über 27 ausgelesene Signal des Bildsensors 14a auf den nächsten hinter 561 folgenden Ausgang umschaltet, so daß es mit der nächstgrößeren Verzögerung ausgelesen wird. Eine Folge von Taktimpulsen $P_1$, $P_2$ usw. am Eingang 60 zusammen mit einer synchronen Folge von Impulsen $\Phi_1$, die der mittleren Elektrode 43 des Bildsensors 14a zugeführt wird, führen an den Schaltungspunkten 28 und 61 zur Ableitung derselben Folge von Auslesesignalen, die in der Schaltung nach Fig. 2 an den Schaltungspunkten 27 und 28 erhalten wird. Die Einstellfolge, nach der das Verzögerungsglied 55 in Fig. 5 auf verschiedene Werte der Verzögerung eingestellt wird, ersetzt also die Einstellfolge, mit der bei einer Anordnung nach den Fig. 1 und 2 der Spiegel 8 schrittweise um den Stift 18 gedreht werden muß.

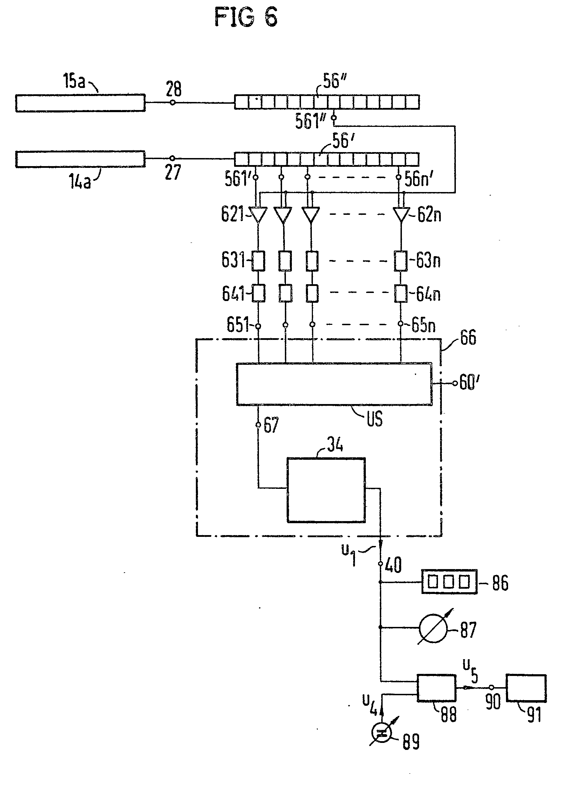

An Hand der Fig. 6 wird im folgenden ein drittes Ausführungsbeispiel der Erfindung beschrieben. Ausgegangen wird dabei wieder von einer Anordnung gemäß Fig. 1, bei der der Spiegel 8 ortsfest angeordnet ist und die Teile 19, 20 und 22 entfallen. Dem Ausgang 27 des Bildsensors 14a ist nunmehr eine Verzögerungsleitung 56' nachgeschaltet, deren Eingang die zeitlich nacheinander ausgelesenen Impulsanteile des Bildsensorsignals seriell zugeführt werden. Vorzugsweise ist die Verzögerungsleitung als eine Ladungsverschiebeeinrichtung ausgebildet, wie dies bereits an Hand der Einrichtung 56 in Fig. 5 beschrieben wurde. Die entsprechend Fig. 5 vorgesehenen Ausgänge 561' bis 56n' sind hierbei an die ersten Eingänge einer Reihe von Differenzverstärkern 621 bis 62n geschaltet. Der Ausgang 28 des Bildsensors 15a ist andererseits mit dem Eingang eines Verzögerungsgliedes 56'' verbunden, das in seinem Aufbau der Verzögerungsleitung 56' vorteilhafterweise angepaßt ist und insbesondere ebenfalls als Ladungsverschiebeeinrichtung ausgebildet ist, wie sie an Hand des Teils 56 in Fig. 5 bereits beschrieben wurde. Im Gegensatz zu der Verzögerungsleitung 56' weist das Verzögerungsglied 56'' nur einen Ausgang 561'' auf, der an die zweiten Eingänge sämtlicher Differenzverstärker 621 bis 62n geführt ist. Die Ausgänge der Differenzverstärker 621 bis 62n sind über individuell zugeordnete Gleichrichter 631 bis 63n und diesen nachgeschaltete Integratoren 641 bis 64n mit Schaltungspunkten 651 bis 65n verbunden, die die Eingänge einer zweiten Bewerterschaltung 66 darstellen. Letztere enthält eine Umschalteeinrichtung $U_S$, die der in Fig. 5 dargestellten entspricht und die Eingänge 651 bis 65n nacheinander auf einen gemeinsamen Ausgang 67 durchschaltet. Der Ausgang 67 steht mit dem Eingang einer Selektionsstufe 34 in Verbindung, die bereits an Hand von Fig. 2 beschrieben wurde. Der Ausgang 40 der Selektionsstufe 34 liefert dann ein Signal $u_1$, das dem Abstand des Gegenstandes 5 von der Kamera 1 entspricht.

In dem Ausführungsbeispiel nach Fig. 6 werden nach nur einer Integrationszeit, die durch einen Impuls $\Phi_1$ bestimmt ist, von dem Bildsensor 14a über sämtliche Ausgänge 561' bis 56n' nahezu gleichzeitig gegeneinander stufenweise verzögerte Auslesesignale abgeleitet, die in den Differenzverstärkern 621 bis 62n jeweils mit einem über den Ausgang 561'' des Verzögerungsgliedes 56'' abgeleiteten Auslesesignal des Bildsensors 15a zu Differenzsignalen verarbeitet werden. Diese stehen nach einer jeweiligen Gleichrichtung in den Gleichrichtern 631 bis 63n und einer Integration über sämtliche zu einem Auslesevorgang der Bildsensoren 14a bzw. 15a gehörigen Impulsanteile, die in den Integratoren 641 bis 64n vorgenommen wird, als integrierte Auslesesignale an den Schaltungspunkten 651 bis 65n praktisch gleichzeitig zur Verfügung. Im Gegensatz zu den vorhergehenden Ausführungsbeispielen genügt also nach Fig. 6 eine einzige Integrationszeit der Bildsensoren 14a und 15a, um die erforderlichen Auslesesignale zu erzeugen, die gemäß den Fig. 2 und 5 nur durch eine Reihe von Integrationszeiten, die zu den einzelnen Schritten der Einstellfolgen des Objektivabstandes bzw. der unterschiedlichen Verzögerungswerte synchron sind, erhalten werden. Damit arbeitet die Anordnung nach Fig. 6 wesentlich schneller als die Anordnungen nach den Fig. 2 oder 5. Die integrierten Auslesesignale, die an den Eingängen 651 bis 65n zur Verfügung stehen, können durch die Umschalteeinrichtung $U_S$ sehr schnell nacheinander an den Ausgang 67 durchgeschaltet werden, was durch eine entsprechend hohe Folgefrequenz der dem Eingang 60' zugeführten Taktimpulse erreicht wird. Die Selektionsstufe 34 verarbeitet die nacheinander eintreffenden integrierten Auslesesignale in der bereits beschriebenen Weise zu der Spannung $u_1$.

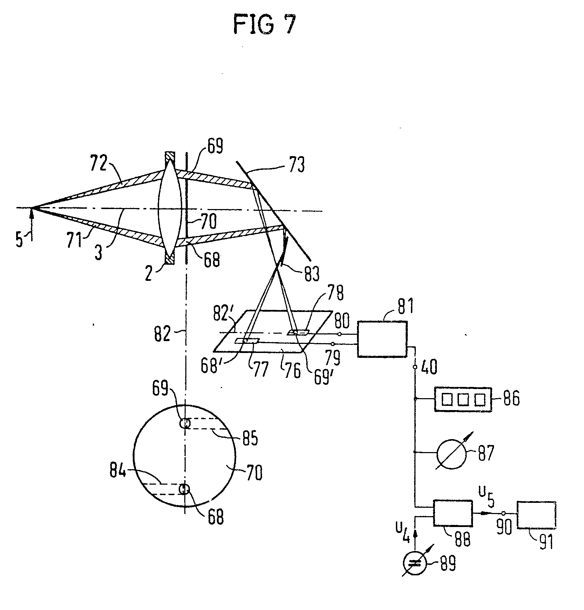

In Fig. 7 ist ein weiteres Ausführungsbeispiel der Erfindung schematisch dargestellt. Wie hieraus hervorgeht, gehören in diesem Fall zu den beiden etwa quer zur Richtung des Gegenstandes 5 gegeneinander versetzten, optischen Einrichtungen zwei Teilpupillen 68 und 69 des Objektivs 2. In der dargestellten Ausführungsform ist eine Blende 70 vorgesehen, die entsprechende Ausnehmungen besitzt. Die von dem Gegenstand 5 ausgehenden und die Teilpupillen 68 und 69 durchdringenden Lichtstrahlbündel sind mit 71 und 72 bezeichnet. Mittels eines Spiegels 73 werden diese Bündel auf eine gegenüber einer Abbildungsebene einen Parallelversatz aufweisende Hilfsebene 76 projiziert, in der zwei lineare CTD-Bildsensoren 77 und 78 angeordnet sind. Unter Abbildungsebene wird eine Bildebene verstanden, auf die der Gegenstand 5 mit maximaler Bildschärfe abgebildet wird. Die Ausgänge 79 und 80 der Bildsensoren sind mit einer auswertenden Einrichtung 81 beschaltet, an deren Ausgang 40 das die zu messende Entfernung des Gegenstandes 5 angebende Signal $u_1$ auftritt. Die CTD-Bildsensoren sind in der bereits beschriebenen Weise ausgebildet.

In Fig. 7 ist die Blende 70 nochmals um eine vertikale, in der Bildebene liegende Achse 82 gedreht und nach unten verschoben dargestellt. Sind die Teilpupillen 68 und 69 in Richtung der Achse 82 gegeneinander versetzt, so ist es zweckmäßig, einen Spiegel oder eine Prismenfläche 83 im Strahlengang eines der Bündel 71 oder 72 so anzuordnen, daß dieses zusätzlich abgelenkt wird. Durch diese Maßnahme wird erreicht, daß die über die Teilpupillen 68 und 69 erhaltenen Abbildungen 68' und 69' in der Hilfsebene 76 bezüglich der Projektion 82' der Achse 82 seitlich versetzt sind, so daß die CTD-Bildsensoren 77 und 78 einen entsprechenden Versatz gegeneinander aufweisen. Damit können sie auch bei einem kleinen Abstand der Teilpupillen in Richtung der Achse 82 ohne Schwierigkeiten in der Hilfsebene 76 nebeneinander angeordnet werden. Werden die Teilpupillen dagegen durch gestrichelt gezeichnete Ausnehmungen 84 und 85 gebildet, die jeweils nur auf einer Seite der Achse 82 liegen, so kann der Spiegel bzw. die Prismenfläche 83 auch entfallen.

Die auswertende Einrichtung 81 in Fig. 7 kann gemäß den Fig. 5 oder 6 ausgebildet sein.

Nach einer bevorzugten, bereits in Verbindung mit Fig. 2 angedeuteten Weiterbildung des Erfindungsgedankens wird nach Beendigung jeder Schaltfolge das Verzögerungsglied 55 bzw. die Umschalteinrichtung $U_S$ erneut getriggert, so daß sich jeweils eine neue Schaltfolge ergibt, die wieder zu einem Signal $u_1$ führt. Auf diese Weise gelingt es, die Entfernung eines sich gegenüber der Anordnung, z. B. der Kamera 1, bewegenden Gegenstandes 5 fortlaufend zu ermitteln. Voraussetzung hierfür ist, daß die Relativgeschwindigkeit zwischen dem Gegenstand 5 und der Anordnung einen durch die Dauer eines Meßzyklus gegebenen Grenzwert nicht übersteigt.

Die auswertende Einrichtung kann in jeder der beschriebenen und in den Fig. 2, 3, 5 und 6 dargestellten Ausführungsformen in integrierter Schaltungstechnik realisiert und insbesondere zu einem monolithischen Halbleiterbaustein zusammengefaßt sein, gegebenenfalls unter Einbeziehung von weiteren Halbleiterschaltungen, die zur automatischen Belichtung oder elektronischen Blenden- bzw. Verschlußsteuerung von fotografischen Kameras dienen.

Die Anordnung nach der Erfindung wurde bisher als Bestandteil einer fotografischen Kamera 1 (Fig. 1) beschrieben. Dabei wird das Objektiv 2 in Abhängigkeit von dem Ergebnis der Entfernungsmessung in seinem Abstand zur Bildebene 4 vorwiegend manuell so eingestellt, daß die Kamera auf den Gegenstand 4 fokussiert wird. Andererseits kann die Anordnung nach der Erfindung aber auch zur Messung der Entfernung des Gegenstandes 5 oder zur Ermittlung seiner Relativgeschwindigkeit ihr gegenüber ohne die Verbindung mit einer fotografischen Kamera benutzt werden. In diesem Fall ist die Bildebene 4 in Fig. 1 ohne Bedeutung, ebenso das Objektiv 2, das lediglich für das Ausführungsbeispiel nach Fig. 7 benötigt wird. Sämtliche dargestellten Ausführungsbeispiele betreffen dann reine Entfernungs- bzw. Geschwindigkeitsmesser. Solche können beispielsweise bei einer Positionsüberwachung von bewegbaren, zu bearbeitenden Gegenständen 5 im Rahmen einer automatischen Fertigungsvorrichtung benutzt werden, wobei die Bewegung der Gegenstände 5 beim Erreichen einer vorgegebenen Position abgestoppt wird. Ein Geschwindigkeitsmesser dieser Art kann mit Vorteil zur Überwachung des Straßenverkehrs eingesetzt werden.

## Patentansprüche

1. Anordnung zur Messung der Entfernung eines Gegenstandes, bei der zwei etwa quer zur Richtung auf den Gegenstand gegeneinander versetzte optische Einrichtungen vorgesehen sind, die zwei Abbildungen desselben liefern, und bei der eine die Abbildungen in Form von elektrischen Signalen auswertende Einrichtung mit zwei den Abbildungen individuell zugeordneten CTD-Bildsensoren vorhanden ist, die aus einem Vergleich der je einer Abbildung zugehörigen Signale eine die Entfernung angebende Meßgröße bildet, dadurch gekennzeichnet, daß eine der beiden optischen Einrichtungen einen drehbar gelagerten Spiegel (8) enthält, daß eine Einstellvorrichtung (22) vorgesehen ist, die den Spiegel (8) in eine Folge von Drehstellungen einstellt, daß die linear ausgerichteten Bildpunkte (48 bis 51) der CTD-Bildsensoren (14a, 15a) in der Verschieberichtung der über den drehbar gelagerten Spiegel (8) erzeugten Abbildung und parallel zueinander angeordnet sind, daß die Ausgänge (27, 28) der CTD-Bildsensoren (14a, 15a) mit einer Bewerterschaltung (29) verbunden sind, die beim Auftreten einer der Einstellfolge zugeordneten Folge von Auslesesignalen beider Bildsensoren (14a, 15a) jeweils aus der Differenz derselben eine Folge von über die Bildpunkte (48 bis 51) integrierten Auslesesignalen ($u_2$) bildet, und daß die Bewerterschaltung (29) einen Ausgang (40) besitzt, an dem ein Signal ($u_1$) auftritt, das von der Einstellung des Spiegels (8) beim Auftreten des integrierten Auslesesignals ($u_2$) kleinster Amplitude abhängig ist und die Entfernung des Gegenstandes (5) angibt.

2. Anordnung zur Messung der Entfernung eines Gegenstandes, bei der zwei etwa quer zur Richtung auf den Gegenstand gegeneinander versetzte optische Einrichtungen vorgesehen sind, die zwei Abbildungen desselben liefern, und bei der eine die Abbildungen in Form von elektrischen Signalen auswertende Einrichtung mit CTD-Bildsensoren vorhanden ist, die aus einem Vergleich der je einer Abbildung zugehörigen Signale eine die Entfernung angebende Meßgröße bildet, dadurch gekennzeichnet, daß die auswertende Einrichtung zwei den Abbildungen individuell zugeordnete CTD-Bildsensoren (14a, 15a) enthält, deren linear ausgerichtete Bildpunkte (48 bis 51) in Richtung der gegenseitigen Verschiebung der Abbildungen bei einer Entfernungsänderung des Gegenstandes und parallel zueinander angeordnet sind, daß der Ausgang (28) des einen CTD-Bildsensors (15a) direkt oder über ein konstantes Verzögerungsglied und der Ausgang (27) des anderen (14a) über ein nach einer Einstellfolge stufenweise einstellbares Verzögerungsglied (55) mit einer Bewerterschaltung (29) verbunden sind, die beim Auftreten der im Takte der Einstellfolge erhaltenen Folge von Auslesesignalen beider Bildsensoren (14a, 15a) jeweils aus der Differenz derselben eine Folge von über die Bildpunkte (48 bis 51) integrierten Auslesesignalen ($u_2$) bildet, und daß die Bewerterschaltung (29) einen Ausgang (40) besitzt, an dem ein Signal ($u_1$) auftritt, das für die beim Auftreten des integrierten Auslesesignals (42) kleinster Amplitude eingestellte Verzögerung charakteristisch ist und die Entfernung des Gegenstandes angibt.

3. Anordnung nach Anspruch 2, dadurch gekennzeichnet, daß die Bewerterschaltung (29) eine Selektionsstufe (34) enthält, die den Zeitpunkt des Auftretens des integrierten Auslesesignals ($u_2$) kleinster Amplitude innerhalb einer Einstellfolge bestimmt und eine elektrische Größe ($u_1$) erzeugt, die der Zeitdifferenz gegenüber dem Beginn der Einstellfolge entspricht.

4. Anordnung nach Anspruch 2, dadurch gekennzeichnet, daß das stufenweise einstellbare Verzögerungsglied (56) als eine CTD-Anordnung ausgebildet ist, deren Stufen mit Ausgängen (561 ... 56n) versehen sind und daß eine Umschaltvorrichtung ($U_S$) vorgesehen ist, die diese Ausgänge (561 ... 56n) in der Reihenfolge ihrer Anordnung nacheinander mit dem Ausgang (61) des Verzögerungsgliedes (55) verbindet.

5. Anordnung zur Messung der Entfernung eines Gegenstandes, bei der zwei etwa quer zur Richtung auf den Gegenstand gegeneinander versetzte optische Einrichtungen vorgesehen sind, die zwei Abbildungen desselben liefern, und bei der eine die Abbildungen in Form von elektrischen Signalen auswertende Einrichtung mit CTD-Bildsensoren vorhanden ist, die aus einem Vergleich der je einer Abbildung zugehörigen Signale eine die Entfernung angebende Meßgröße bildet, dadurch gekennzeichnet, daß die auswertende Einrichtung zwei den Abbildungen individuell zugeordnete CTD-Bildsensoren (14a, 15a) enthält, deren linear ausgerichtete Bildpunkte (48 bis 51) in Richtung der gegenseitigen Verschiebung der Abbildungen bei einer Entfernungsänderung des Gegenstandes und parallel zueinander angeordnet sind, daß der Ausgang des einen CTD-Bildsensors (14a) an eine Verzögerungsleitung (56') mit einer Mehrzahl von gegeneinander versetzten Ausgängen (561' ... 56n') geschaltet ist, daß eine Reihe von Differenzverstärkern (621 ... 62n) vorgesehen sind, deren erste Eingänge mit den Ausgängen (561' ... 56n') der Verzögerungsleitung (56') beschaltet sind und deren zweite Eingänge gemeinsam an den Ausgang (28) des anderen CTD-Bildsensors (15a) direkt oder über ein zwischengeschaltetes konstantes Verzögerungsglied (56'') gelegt sind, und daß die Differenzverstärker (621 ... 62n) über nachgeschaltete Gleichrichter (631 ... 63n) und Integratoren (641 ... 64n) an die Eingänge (651 ... 65n) einer Bewerterschaltung (66) geschaltet sind, die den Integrator mit dem kleinsten Ausgangssignal ermittelt und ein für diesen charakteristisches Signal ($u_1$) erzeugt, das die Entfernung des Gegenstandes (5) angibt.

6. Anordnung nach Anspruch 5, dadurch gekennzeichnet, daß die Bewerterschaltung (66) eine Umschalteeinrichtung ($U_S$) aufweist, die jeden ihrer Eingänge einzeln nach einer vorgegebenen zeitlichen Schaltfolge mit dem Eingang einer Selektionsstufe (34) verbindet, die den Zeitpunkt des Auftretens des integrierten Ausgangssignals ($u_2$) kleinster Amplitude innerhalb einer Schaltfolge bestimmt und eine elektrische Größe ($u_1$) erzeugt, die der Zeitdifferenz gegenüber dem Beginn der Schaltfolge entspricht.

7. Anordnung nach einem der vorhergehenden Ansprüche, dadurch gekennzeichnet, daß jeder der CTD-Bildsensoren (14a, 15a) mindestens eine als Ladungsverschiebevorrichtung ausgebildete Auslesevorrichtung (44 bis 47) aufweist.

8. Anordnung nach einem der Ansprüche 1 bis 7, dadurch gekennzeichnet, daß die optischen Einrichtungen aus einem Objektiv (2) zwei unterschiedliche Pupillenbereiche definierende Teilpupillen (68, 69) ausblenden.

9. Anordnung nach einem der Ansprüche 4 oder 6, dadurch gekennzeichnet, daß die Umschaltevorrichtung ($U_S$) aus einer Reihe von UND-Gattern (571 ... 57n) besteht, deren erste Eingänge die Eingänge der Umschaltevorrichtung ($U_S$) darstellen, deren Ausgänge miteinander verbunden sind und deren zweite Eingänge mit den einzelnen Ausgängen (581 ... 58n) eines Schieberegisters (58) beschaltet sind, in dem ein einzelnes, durch einen Spannungswert gekennzeichnetes logisches Signal verschiebbar ist.

10. Anordnung nach einem der Ansprüche 3 oder 6, dadurch gekennzeichnet, daß die Selektionsstufe (34) zwei Abtaststufen (35, 39), einen Komparator (36) und einen triggerbaren, einen ansteigenden oder abfallenden Spannungsverlauf liefernden Generator (38) aufweist, daß der Eingang der Selektionsstufe (34) an den Signaleingang der ersten Abtaststufe (35) und den ersten Eingang des Komparators (36) geführt ist, daß der Ausgang der ersten Abtaststufe (35) an den zweiten Eingang des Komparators (36) geführt ist, daß der Komparatorausgang an die Steuereingänge der beiden Abtaststufen (35, 39) gelegt ist, daß der Signaleingang der zweiten Abtaststufe (39) mit dem Generator (38) beschaltet ist und daß der Ausgang der zweiten Abtaststufe (39) die genannte elektrische Größe ($u_1$) liefert.

11. Anordnung nach einem der vorhergehenden Ansprüche, dadurch gekennzeichnet, daß die Bewerterschaltung (29, 66) als eine Halbleiterschaltung ausgebildet ist, die insbesondere auf einem Halbleitersubstrat monolithisch integriert ist.

12. Anordnung nach einem der vorhergehenden Ansprüche, dadurch gekennzeichnet, daß der Ausgang (40) der Bewerterschaltung (29, 66) mit einer Meßeinrichtung (86, 87) zur Anzeige der Entfernung des Gegenstandes (5) von der Anordnung verbunden ist.

13. Anordnung nach Anspruch 12, dadurch gekennzeichnet, daß der Ausgang (40) der Bewerterschaltung (29, 66) mit einer Einrichtung (88, 89) verbunden ist, die bei Erreichen einer vorgegebenen Entfernung des Gegenstandes (5) ein Signal ($u_5$) abgibt.

14. Anordnung nach Anspruch 13, dadurch gekennzeichnet, daß die genannte Einrichtung (88, 89) mit einem Zeitmesser (91) gekoppelt ist, der das Zeitintervall zwischen zwei vorgegebenen Entfernungen des Gegenstandes (5) ermittelt.

15. Verwendung der Anordnung nach einem der Ansprüche 1 bis 12 in einer fotografischen Kamera.

16. Verfahren zum Betrieb der Anordnung nach Anspruch 1, dadurch gekennzeichnet, daß die Einstellvorrichtung (22) wiederholten Einstellfolgen unterworfen wird.

17. Verfahren zum Betrieb der Anordnung nach Anspruch 2, dadurch gekennzeichnet, daß das einstellbare Verzögerungsglied (55) wiederholten Einstellfolgen unterworfen wird.

18. Verfahren zum Betrieb der Anordnung nach Anspruch 5, dadurch gekennzeichnet, daß die Umschalteeinrichtung ($U_5$) der Bewerterschaltung wiederholten Schaltfolgen unterworfen wird.

## Claims

1. An arrangement for measuring the range of an object, wherein two optical devices are provided which are offset relative to one another approximately transversely to the direction of the object and which supply two images of said object, and wherein a device is provided which analyses the images in the form of electrical signals, and which comprises two CTD image sensors individually assigned to the images which act on the basis of a comparison of the signals in each case assigned to an image to form a measurement value which indicates the range, characterised in that one of the two optical devices has a rotatably mounted reflector (8), that a setting device (22) is provided which sets the reflector (8) in a sequence of rotary positions, that the linearly aligned image points (48 to 51) of the CTD image sensors (14a, 15a) are arranged mutually parallel in the direction of shift of the image produced via the rotatably mounted reflector (8), the outputs (27, 28) of the CTD image sensors (14a, 15a) being connected to an evaluator circuit (29) which acts on the occurrence of a sequence of read-out signals, assigned to the setting sequence, from the two image sensors (14a, 15a) to form on the basis of the difference a sequence of read-out signals ($u_2$) which are integrated over the image points (48 to 51), and that the evaluator circuit (29) possesses an output (40) at which occurs a signal ($u_1$) which is dependent upon the setting of the reflector (8) on the occurrence of the integrated read-out signal ($u_2$) of the smallest amplitude and which indicates the range of the object (5).

2. An arrangement for measuring the range of an object, wherein two optical devices are provided which are offset relative to one another approximately transversely to the direction of the object and which supply two images of said object, and wherein a device is provided which analyses the images in the form of electrical signals, is provided with CTD image sensors, and, by comparing the signals in each case assigned to an image, forms a measurement value which indicates the range, characterised in that the analysing device contains two CTD image sensors (14a, 15a) which are individually assigned to the images and whose linearly aligned image points (48 to 51) are arranged mutually parallel in the direction of the mutual shift of the images in the event of a change in the range of the object, the output (28) of the first CTD image sensor (15a) being connected directly or via a constant delay element to an evaluator circuit (29), whereas the output (27) of the other CTD image sensor (14a) is connected via a delay element (55), which can be set in stepped fashion in accordance with a setting sequence, to the evaluator circuit (29), which acts on the occurrence of the sequence of read-out signals — contained in the setting sequence — from the two image sensors (14a, 15a) on the basis of the difference to form a sequence of read-out signals ($u_2$) which are integrated over the image points (48 to 51), and that the evaluator circuit (29) possesses an output (40) at which occurs a signal ($u_1$) which is characteristic of the delay set on the occurrence of the integrated read-out signal (42) of the smallest amplitude, and which indicates the range of the object.

3. An arrangement as claimed in claim 2, characterised in that the evaluator circuit (29) contains a selection stage (34) which determines the time of the occurrence of the integrated read-out signal (u₂) of the smallest amplitude within a setting sequence and which generates an electrical value (u₁) which corresponds to the time difference relative to the start of the setting sequence.

4. An arrangement as claimed in claim 2, characterised in that the delay element (56) which can be set in stepped fashion is designed as a CTD arrangement, the stages of which are provided with outputs (561 ... 56n), and that a switch-over device (U_S) is provided which connects these outputs (561 ... 56n) consecutively, in the sequence in which they are arranged, to the output (61) of the delay element (55).

5. An arrangement for measuring the range of an object, wherein two optical devices are provided which are offset relative to one another approximately transversely to the direction of the object and which supply two images of said object, and wherein a device is provided which analyses the images in the form of electrical signals and which is provided with CTD image sensors and which, on the basis of a comparison of the signals each assigned to an image, forms a measurement value which indicates the range, characterised in that the analysing device contains two CTD image sensors (14a, 15a) which are individually assigned to the images and whose linearly aligned image points (48 to 51) are arranged mutually parallel in the direction of the mutual shift of the images in the event of a change in the range of the object, the output of the first CTD image sensor (14a) being connected to a delay line (56') which possesses a plurality of outputs (561' ... 56n') which are offset relative to one another, a series of differential amplifiers (621 ... 62n) being provided, the first inputs of which are connected to the outputs (561' ... 56n') of the delay line (56'), and the second inputs of which are commonly connected to the output (28) of the other CTD image sensor (15a) either directly or via an interposed constant delay element (56''), and that the differential amplifiers (621 ... 62n) are connected via following rectifiers (631 ... 63n) and integrators (641 ... 64n) to the inputs (651 ... 65n) of an evaluator circuit (66) which determines the integrator with the smallest output signal and generates a signal (u₁) which is characteristic of said integrator and which indicates the range of the object (5).

6. An arrangement as claimed in claim 5, characterised in that the evaluator circuit (66) possesses a switch-over device (U_S) which connects each of the inputs thereof individually and in accordance with a predetermined switching time sequence to the input of a selection stage (34) which determines the time of the occurrence of the integrated output signal (u₂) having the smallest amplitude within a switching sequence, and which generates an electrical value (u₁) which corresponds to the time difference relative to the start of the switching sequence.

7. An arrangement as claimed in one of the preceding claims, characterised in that each of the CTD image sensors (14a, 15a) comprises at least one read-out device (44 to 47) which is designed as a charge shift device.

8. An arrangement as claimed in one of claims 1 to 7, characterised in that the optical devices gate out from an objective (2) two sub-pupils (68, 69) which define different pupil zones.

9. An arrangement as claimed in one of the claims 4 or 6, characterised in that the switch-over device (U_S) consists of a series of AND gates (571 ... 57n) whose first inputs represent the inputs of the switch-over device (U_S), whose outputs are connected to one another, and whose second inputs are connected to the individual outputs (581 ... 58n) of a shift register (58) in which can be shifted an individual logic signal characterised by a voltage value.

10. An arrangement as claimed in one of the claims 3 or 6, characterised in that the selection stage (34) comprises two scanning stages (35, 39), a comparator (36), and a triggerable generator (38) which supplies a rising or falling voltage curve, that the input of the selection stage (34) leads to the signal input of the first scanning stage (35) and to the first input of the comparator (36), that the output of the first scanning stage (35) leads to the second input of the comparator (36), that the comparator output is connected to the control inputs of the two scanning stages (35, 39), that the signal input of the second scanning stage (39) is connected to the generator (38), and that the output of the second scanning stage (39) supplies the aforementioned electrical value (u₁).

11. An arrangement as claimed in one of the preceding claims, characterised in that the evaluator circuit (29, 66) is a semiconductor circuit which, in particular, is monolithically integrated on a semiconductor substrate.

12. An arrangement as claimed in one of the preceding claims, characterised in that the output (40) of the evaluator circuit (29, 66) is connected to a measuring device (86, 87) which serves to indicate the range of the object (5) from the arrangement.

13. An arrangement as claimed in claim 12, characterised in that the output (40) of the evaluator circuit (29, 66) is connected to a device (88, 89) which emits a signal (u₅) when a predetermined range of the object (5) is reached.

14. An arrangement as claimed in claim 13, characterised in that the aforementioned device (88, 89) is coupled to a time measuring unit (91) which determines the interval of time between two predetermined ranges of the object (5).

15. The use of the arrangement as claimed in one of the claims 1 to 12 in a photographic camera.

16. A method of operation of the arrangement claimed in claim 1, characterised in that the setting device (22) is subjected to repeated setting sequences.

17. A method of operation of the arrangement claimed in claim 2, characterised in that the adjustable delay device (55) is subjected to repeated setting sequences.

18. A method of operation of the arrangement claimed in claim 5, characterised in that the switch-over device (U$_S$) of the evaluator circuit is subjected to repeated switching sequences.

**Revendications**

1. Dispositif pour mesurer la distance d'un objet, du type dans lequel il est prévu deux dispositifs optiques décalés l'un par rapport à l'autre à peu près transversalement à la direction menant vers l'objet, et fournissant deux images de ce dernier, et dans lequel il est prévu un dispositif évaluant les images sous la forme de signaux électriques et comportant deux détecteurs d'image CTD associés individuellement aux images, les deux détecteurs formant, à partir de la comparaison entre les signaux associés respectivement aux images, une grandeur de mesure indiquant la distance, caractérisé par le fait que l'un des deux dispositifs optiques comporte un miroir (8) monté à rotation, qu'il est prévu un dispositif de réglage (22) réglant le miroir dans une série de positions de rotation, que les points d'image (48 à 51) alignés suivant une droite, des détecteurs d'images CTD (14a, 15a) sont disposés parallèlement entre eux dans la direction du déplacement de l'image produite par le miroir (8) monté à rotation, que les sorties (27, 28) des détecteurs d'images CTD (14a, 15a) sont reliées à un circuit de pondération qui forme, à l'apparition d'une série de signaux de lecture des deux détecteurs d'images (14a, 15a), associés à la série de positions de réglage, respectivement, à partir de la différence de ces signaux, des signaux de lecture (u$_2$) intégrés sur les points d'image (48 à 51), et que le circuit de pondération (29) possède une sortie (40) au niveau de laquelle apparaît un signal qui dépend de la position de réglage du miroir (8), à l'apparition du signal de lecture intégré (u$_2$) de plus faible amplitude et qui indique la distance de l'objet (5).

2. Dispositif pour mesurer la distance d'un objet, du type dans lequel il est prévu deux dispositifs optiques décalés l'un par rapport à l'autre à peu près transversalement à la direction menant vers l'objet, et fournissant deux images de ce dernier, et dans lequel il est prévu un dispositif évaluant les images sous la forme de signaux électriques et comportant deux détecteurs d'image CTD associés individuellement aux images, les deux détecteurs formant, à partir de la comparaison entre les signaux associés respectivement aux images, une grandeur de mesure indiquant la distance, caractérisé par le fait que le dispositif d'évaluation comporte deux détecteurs d'images CTD (14a, 15a) associés individuellement aux images, et dont les points d'image (48 à 51), alignés suivant une droite sont disposés parallèlement entre eux, lors d'une modification de la distance de l'objet, que la sortie (28) de l'un des détecteurs d'images CTD (15a) est relié directement ou par l'intermédiaire d'un élément à retard constant, et la sortie (27) de l'autre détecteur d'images CTD (14a) est reliée par l'intermédiaire d'un élément à retard (55) réglable pas-à-pas après une série de réglages, avec un circuit de pondération (29) qui, à l'apparition de la série de signaux de lecture des deux détecteurs d'images (14a, 15a), obtenue à la cadence de la série des réglages, forme respectivement, à partir de la différence de ces signaux, une série de signaux de lecture (u$_2$) intégrée sur les points d'image (48 à 51), et que le circuit de pondération (29) possède une sortie (40) au niveau de laquelle apparaît un signal (u$_1$) qui, à l'apparition du signal de lecture intégré (42) de plus faible amplitude est caractéristique pour le retard réglé et indique la distance de l'objet.

3. Dispositif selon la revendication 2, caractérisé par le fait que le circuit de pondération (29) comporte un étage de sélection (34) qui détermine, à l'intérieur de la série des réglages, l'instant de l'apparition du signal de lecture intégré (u$_2$) de plus faible amplitude et produit une grandeur électrique (u$_1$) qui correspond à la différence temporelle par rapport au début de la série des réglages.

4. Dispositif selon la revendication 2, caractérisé par le fait que l'élément à retard réglable par paliers (56) est réalisé sous la forme d'un dispositif CTD dont les étages sont pourvus de sorties (561 ... 56n) et qu'il est prévu un dispositif de commutation (U$_S$) qui relie ces sorties (561 ... 56n) dans l'ordre de leur disposition, successivement avec la sortie (61) de l'élément à retard (55).

5. Dispositif pour mesurer la distance d'un objet, du type dans lequel il est prévu deux dispositifs optiques décalés l'un par rapport à l'autre à peu près transversalement à la direction menant vers l'objet, et fournissant deux images de ce dernier, et dans lequel il est prévu un dispositif évaluant les images sous la forme de signaux électriques et comportant deux détecteurs d'image CTD associés individuellement aux images, les deux détecteurs formant, à partir de la comparaison entre les signaux associés respectivement aux images, une grandeur de mesure indiquant la distance, caractérisé par le fait que le dispositif d'évaluation comporte deux détecteurs d'images CTD (14a, 15a) associés individuellement aux images, dont les points d'image (48 à 51) sont alignés sur une droite dans la direction de décalage réciproque des images lors d'une modification de la distance de l'objet, et sont disposés parallèlement entre eux, que la sortie de l'un des détecteurs d'images CTD (14a) est reliée à un élément à retard (56') à plusieurs sorties (561' ... 56n') décalées l'une par rapport à l'autre, qu'il est prévu une série d'amplificateurs différentiels (621 ... 62n) dont les premières entrées sont reliées aux sorties (561' ... 56n') de la ligne à retard (56'), et dont les secondes entrées sont reliées en commun à la sortie (28) de l'autre détecteur d'images CTD (15a) soit directement ou par l'intermédiaire d'un élément à retard constant (56''), et que les amplificateurs différentiels (621 ... 62n) sont reliés, par l'intermédiaire de redresseurs aval (631 ... 63n) et d'intégrateurs (641 ... 64n), aux entrées (651 ... 65n) d'un circuit de pondération (66) qui détermine l'intégrateur à plus faible signal de sortie et fournit un signal $(u_1)$ qui leur est caractéristique et qui indique la distance de l'objet (5).

6. Dispositif selon la revendication 5, caractérisé par le fait que le circuit de pondération (66) comporte un circuit de commutation $(U_S)$ qui relie individuellement chacune de ses entrées, suivant une séquence déterminée dans le temps, à l'entrée d'un étage de sélection (34) qui détermine un instant de l'apparition du signal de sortie intégré $(u_2)$ de plus faible amplitude, à l'intérieur d'une série de commutations, et qui produit une grandeur électrique $(u_1)$ qui correspond à la différence temporelle par rapport au début de la série de commutations.

7. Dispositif selon l'une des revendications antérieures, caractérisé par le fait que chacun des détecteurs CTD (14a, 15a) comporte au moins un dispositif de lecture (44 à 47), réalisé sous la forme d'un dispositif à transfert de charges.

8. Dispositif selon l'une des revendications 1 à 7, caractérisé par le fait que les dispositifs optiques isolent d'un objectif (2) deux pupilles partielles (68, 69) qui définissent deux zones de pupilles différentes.

9. Dispositif selon l'une des revendications 4 ou 6, caractérisé par le fait que le dispositif de commutation $(U_S)$ est constitué par une série de portes ET (571 ... 57n) dont les premières entrées représentent les entrées du dispositif de commutation $(U_S)$, dont les sorties sont reliées entre elles et dont les secondes entrées sont reliées avec les différentes sorties (581 ... 58n) d'un registre à décalage (58) dans lequel est déplaçable un signal logique unique caractérisé par une valeur de tension.

10. Dispositif selon l'une des revendications 3 ou 8, caractérisé par le fait que l'étage de sélection (34) comporte deux étages de balayage ou de détection (35, 39), un comparateur (36) et un générateur (38) susceptible d'être déclenché et fournissant une allure de tension croissante ou décroissante, que l'entrée de l'étage de sélection (34) est reliée à l'entrée des signaux du premier étage de balayage (35) et à la première entrée du comparateur (36), que la sortie du premier étage de balayage (35) est reliée à la seconde entrée du comparateur (36), que la sortie du comparateur est reliée aux entrées de commande des deux étages de balayage (35, 39), que l'entrée des signaux du second étage de balayage (39) est reliée au générateur (38) et que la sortie du second étage de balayage (39) fournit ladite grandeur électrique $(u_1)$.

11. Dispositif selon l'une des revendications antérieures, caractérisé par le fait que le circuit de pondération (29, 66) est réalisé sous la forme d'un circuit à semiconducteurs qui est, plus particulièrement, intégré par voie monolithique sur un substrat semiconducteur.

12. Dispositif selon l'une des revendications antérieures, caractérisé par le fait que la sortie du circuit de pondération (29, 66) est reliée à un dispositif de mesure (86, 87) servant à indiquer la distance de l'objet (5) au dispositif.

13. Dispositif selon la revendication 12, caractérisé par le fait que la sortie (40) du circuit de pondération (29, 66) est reliée à un dispositif (88, 89) qui émet un signal $(u_5)$ lorsque l'objet atteint une distance prédéterminée.

14. Dispositif selon la revendication 13, caractérisé par le fait que le dispositif mentionné (88, 89) est accouplé à un dispositif de la mesure du temps (91) qui détermine l'intervalle de temps entre deux distances prédéterminées de l'objet (5).

15. Mise en oeuvre du dispositif selon l'une des revendications 1 à 12, dans un appareil photographique.

16. Procédé pour l'exploitation du dispositif selon la revendication 1, caractérisé par le fait que le dispositif de réglage (22) est soumis à des séries de réglage répétées.

17. Procédé pour l'exploitation du dispositif selon la revendication 2, caractérisé par le fait que l'élément à retard réglable (55) est soumis à des séries de réglage répétées.

18. Procédé pour l'exploitation du dispositif selon la revendication 5, caractérisé par le fait que le dispositif de commutation $(U_S)$ du circuit de pondération est soumis à des séries de commutations répétées.

0 004 584

FIG 1

15

# FIG 2

FIG 3

# FIG 4

# FIG 5

# FIG 6

## FIG 7